# EUROPEAN PATENT APPLICATION

(11) **EP 4 600 581 A1**
(43) Date of publication of application: **13.08.2025**
(21) Application number: 24156767.6
(22) Date of filing: 09.02.2024
(51) Int. Cl.: F24S 23/74, F24S 30/425, F24S 40/00

(54) **THERMAL SOLAR COLLECTOR ARRANGEMENT FOR HEATING A FLUID**

(71) Applicant: Stångåkonsult i Kalmar Handelsbolag, 391 23 Kalmar (SE)
(72) Inventor: JILKÉN, Leif, 392 36 Kalmar (SE)
(74) Representative: Bergenstråhle & Partners AB

(57) **Abstract**

Disclosed is a thermal solar collector arrangement (1) comprising a solar energy absorbing tube (10) for a fluid and a reflector (20) arranged along the tube (10) and arranged to focus reflected light onto the tube (10) so that the fluid inside the tube (10) is heated up. The arrangement (1) has a wall (30, 35) and a foot (40, 45) on its respective first and second end (1a, 1b) through which the tube (10) extends. The reflector (20) and the walls (30, 35) are rotatable in relation to the feet (40, 45). The walls (30, 35) and feet (40, 45) are so dimensioned that the reflector (20) can be rotated from its open position where it receives sunlight into a closed position where an inner side (22) of the reflector is enclosed by the walls, the rotated reflector and ground surface. Hereby, the reflector 20 can easily be protected when for example a sandstorm approaches.

## Description

### Technical field

The present invention relates generally to a thermal solar collector arrangement for heating a fluid. More specifically, the present invention relates to a solar collector arrangement comprising a solar energy absorbing tube for a fluid and a reflector arranged along the solar energy absorbing tube and arranged to focus reflected light onto the solar energy absorbing tube so that the fluid inside the solar energy absorbing tube is heated up.

### Background art

Solar energy is an almost endless resource of energy received everywhere on the surface of the earth, in daytime. Also, solar energy is a clean and renewal energy resource. In addition, every person is allowed to exploit solar energy as no one owns the energy of the solar beams, in contrast to fossil fuels, hydro power etc. All in all, this makes solar energy the most suitable energy resource for every man, for example in poorer countries.

One type of gear for exploiting solar energy are thermal solar collectors. A thermal solar collector uses solar energy to heat up a medium, especially a fluid, for example water. Typically, a thermal solar collector arrangement comprises a solar energy absorbing tube for a fluid and a reflector arranged along the solar energy absorbing tube and arranged to focus reflected light onto the solar energy absorbing tube so that the fluid inside the solar energy absorbing tube is heated up.

Examples of such thermal solar collector arrangements are described in published International patent applications WO23187373A1 and WO22245197A1. The thermal solar collectors described therein are rotatable in order to follow the movement of the sun over the sky. Such thermal solar collectors are used out in the countryside and will therefore be exposed to hard weather conditions and other external impacts that may influence the thermal solar collector. For example, if the thermal solar collector arrangement of WO22245197 will be exposed to a sandstorm, the motors and transmissions providing the rotational movement and tilting movement of the upper support structure may be destroyed. Also, a sandstorm would blast the inner surface of the reflector. Shortly, a sandstorm would severely shorten the lifetime of this thermal solar collector arrangement. Consequently, there is a need for a thermal solar collector arrangement that could cope for hard weather conditions and other external impacts.

### Summary of invention

An object of embodiments of the present invention is to provide a thermal solar collector arrangement that could cope for hard weather conditions and other external impacts. Another object of embodiments is to provide a thermal solar collector arrangement that is cost-efficient so that it is affordable for most people. Another object is to provide a thermal solar collector arrangement that is easy to handle. It is possible to achieve at least of one of these objects by using a thermal solar collector arrangement as defined in any of the attached claims.

According to an aspect, a thermal solar collector arrangement is provided that extends in an extension direction from its first end towards its second end. The solar collector arrangement comprises a solar energy absorbing tube for receiving a fluid, the solar energy absorbing tube having a central axis extending in the extension direction. The solar collector arrangement further comprises a reflector extending along the solar energy absorbing tube from its first end to its opposite second end. The reflector has a reflecting inner surface pointing towards the solar energy absorbing tube. The reflector has a bent shape arranged so that light falling onto the inner surface of the reflector, after being reflected falls onto the solar energy absorbing tube. The bent shape is a bent cross-sectional shape in a plane perpendicular to the extension direction. The bent cross-sectional shape extends in the plane perpendicular to the extension direction from a first cross-sectional end to a second cross-sectional end of the reflector. The solar collector arrangement further comprises a first wall secured to the first end of the reflector, along the inner surface of the reflector. The first wall has a base extending between the first cross-sectional end and the second cross-sectional end of the reflector, the base being distanced from the reflector between the first and the second cross-sectional ends. The solar collector arrangement further comprises a second wall secured to the second end of the reflector, along the inner surface of the reflector. The second wall has a base extending between the first cross-sectional end and the second cross-sectional end of the reflector, the base being distanced from the reflector between the first and the second cross-sectional end. The solar collector arrangement further comprises a first foot arranged at the first end of the solar collector arrangement, the first foot having a base for positioning on a ground surface, and a second foot arranged at the second end of the solar collector arrangement, the second foot having a base to be positioned on a ground surface. Further, the solar energy absorbing tube extends through the first foot, the first wall, the second wall, and the second foot. The reflector, the first wall and the second wall are rotatably arranged to the first and second foot and rotatable around the central axis of the solar energy absorbing tube. Further, the first foot, the first wall, the second foot and the second wall are so dimensioned that the reflector when rotated around the central axis can be rotated into a closed position in which the base of the first wall is in level with the base of the first foot and the base of the second wall is in level with the base of the second foot.

In such a closed position, and when the solar collector arrangement is positioned with its first and second foot on a ground surface, the base of the first wall is on approximately the same level as the base of the first foot. Also, the base of the second wall is on approximately the same level as the base of the second foot. As the bases of the first and second feet are positioned on ground, this means the bases of the first and second wall will also be on ground. Further, as the first wall is secured to the first end of the reflector, along the inner surface of the reflector, and the second wall is secured to the second end of the reflector, along the inner surface of the reflector, when the reflector has been rotated into the closed position, the first wall and the second wall form a more or less closed space together with the ground surface and the reflector, or actually the outer side of the reflector, at least as long as the ground surface is rather even. Hereby, by rotating the reflector into the closed position, together with the first and second wall that are secured to the reflector, i.e., so that the reflector becomes upside down compared to when used as a reflector for reflecting sunlight towards the solar energy absorbing tube, the inner surface of the reflector is well protected when e.g., sandstorms or other types of events occurs that may harm the inner surface of the reflector. In the long run, by simply rotating the reflector when not used and/or when bad weather approaches, the lifetime of the solar collector arrangement can be prolonged significantly.

According to an embodiment, a position of the first wall where the solar energy absorbing tube extends through the first wall, a position of the second wall where the solar energy absorbing tube extends through the second wall, a position of the first foot where the solar energy absorbing tube extends through the first foot and a position of the second foot where the solar energy absorbing tube extends through the second foot are so selected that the reflector when rotated around the central axis can be rotated into a closed position in which the base of the first wall is in level with the base of the first foot and the base of the second wall is in level with the base of the second foot. Hereby it is defined that by selecting those positions cleverly, the reflector can be rotated into the closed position. According to an embodiment, the first wall has a hole at the position of the first wall through which the solar energy absorbing tube extends, the first foot has a hole at the position of the first foot through which the solar energy absorbing tube extends, the second wall has a hole at the position of the second wall through which the solar energy absorbing tube extends and the second foot has a hole at the position of the second foot through which the solar energy absorbing tube extends.

According to another embodiment, a first distance between a position of the first wall where the solar energy absorbing tube extends through the first wall and the base of the first wall, the first distance being perpendicular to the base of the first wall, is approximately the same as a second distance between a position of the first foot where the solar energy absorbing tube extends through the first foot and the base of the first foot, the second distance being perpendicular to the base of the first foot. Further, a third distance between a position of the second wall where the solar energy absorbing tube extends through the second wall and the base of the second wall, the third distance being perpendicular to the base of the second wall, is approximately the same as a fourth distance between a position of the second foot where the solar energy absorbing tube extends through the second foot and the base of the second foot, the fourth distance being perpendicular to the base of the second foot.

According to another embodiment, the first wall has a hole through which the solar energy absorbing tube extends, and the first foot has a hole through which the solar energy absorbing tube extends. Further, a first distance between the hole of the first wall and the base of the first wall perpendicular to the base of the first wall is approximately the same as a second distance between the hole of the first foot and the base of the first foot perpendicular to the base of the first foot. Further, the second wall has a hole through which the solar energy absorbing tube extends, and the second foot has a hole through which the solar energy absorbing tube extends. Further, a third distance between the hole of the second wall and the base of the second wall perpendicular to the base of the second wall is approximately the same as a fourth distance between the hole of the second foot and the base of the second foot perpendicular to the base of the second foot.

According to another embodiment, the first foot is positioned outside of the first wall so that the first foot faces a side of the first wall facing away from the second wall. Also, the second foot is positioned outside of the second wall so that the second foot faces a side of the second wall facing away from the first wall.

According to yet another embodiment, the reflector has a circular shape in the cross-sectional plane and an extension from its first cross-sectional end to its second cross-sectional end that covers approximately 180 degrees seen from a center of a circle of the circular shape. Alternatively, the reflector has an elliptical shape in the cross-sectional plane and an extension from its first cross-sectional end to its second cross-sectional end that covers approximately 180 degrees seen from a center of an ellipse of the elliptical shape.

According to yet another embodiment, the base of the first wall provides a plain surface facing away from the inner surface of the reflector, and wherein the base of the second wall provides a plain surface facing away from the inner surface of the reflector. Hereby, you get a good protection against surrounding sand etc, as the bases will more or less seal against the ground, as long as the ground is substantially flat.

According to another embodiment, the bent cross-sectional shape of the reflector in the plane Y perpendicular to the extension direction is a shape of an arc of a circle, and wherein the solar energy absorbing tube is positioned biased from a center of the circle. Normally, such a reflector has an elliptical cross-sectional shape and the solar energy absorbing tube is positioned in one of the focal points of the ellipse. By using a shape of an arc of a circle and positioning the solar energy absorbing tube biased or skewed from the centre of the circle, the solar energy absorbing tube can be positioned so that sun light reflected from the reflector falls spread out over a larger part of the surface of the tube in relation to prior art.

According to yet another embodiment, the first wall has a shape of a substantially flat, filled, half cylinder which bent envelope surface is secured to the first end of the reflector. Also, the second wall has a shape of a substantially flat, filled, half cylinder which bent envelope surface is secured to the second end of the reflector.

According to yet another embodiment, the first foot has a shape of a substantially flat, filled, half cylinder, which straight surface opposite its bent envelope surface constitutes the base of the first foot. Further, the second foot has a shape of a substantially flat, filled, half cylinder, which straight surface opposite its bent envelope surface constitutes the base of the second foot.

According to yet an embodiment, the first and second wall are composed of a composite material comprising a polymer reinforced with organic fiber material. Such a material is durable, in other words, it stands severe weather conditions such as sandstorms. Also, the material is easy to treat, which makes it easy to secure the respective first and second reflector end to the respective first and second wall when made by such a material. Also, holes for the solar energy absorbing tube can be easily and exactly produced in the walls by drilling.

Further possible features and benefits of this solution will become apparent from the detailed description below.

### Brief description of drawings

The solution will now be described in more detail by means of exemplary embodiments and with reference to the accompanying drawings, in which:
Fig. 1 shows a perspective view of a thermal solar collector arrangement in an open position, according to embodiments of the invention.
Fig. 2 shows a cross-section in section Y-Y of the reflector of the thermal solar collector arrangement of fig. 1.
Fig. 3 shows a perspective view of the thermal solar collector arrangement of fig. 1 in a closed position.
Fig. 4 shows a perspective view of the thermal solar collector arrangement of fig. 1 without the feet.
Fig. 5a is a side view of the first wall of the thermal solar collector arrangement of fig. 1.
Fig. 5b is a side view of the first foot of the thermal solar collector arrangement of fig. 1.
Fig. 6 is a perspective view of a solar collector arrangement arranged vertically on a wall.

### Description of embodiments

In the following, a detailed description of an embodiment of a thermal solar collector arrangement 1 according to the invention is provided with reference to the attached figures.

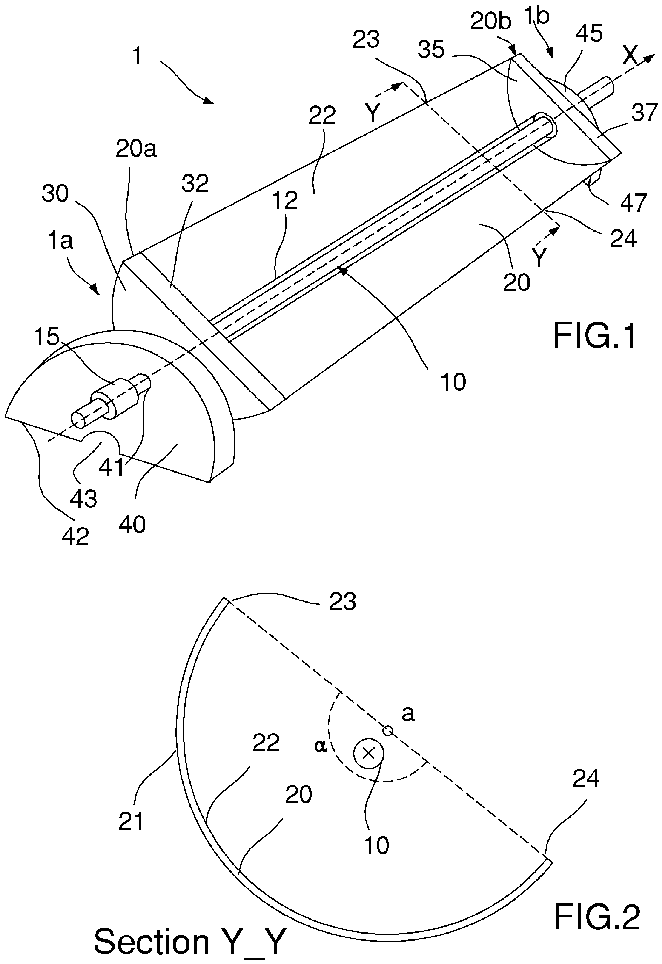

Fig. 1 is a perspective view of an embodiment of the thermal solar collector arrangement 1. The thermal solar collector arrangement 1 has an elongated extension from its first end 1a to its second end 1b. The thermal solar collector arrangement 1 comprises a solar energy absorbing tube 10 for receiving a fluid to be heated, for example water. The solar energy absorbing tube 10 has a central axis X. The elongate thermal solar collector arrangement 1 as well as its solar energy absorbing tube 10 extends along the central axis X. The solar energy absorbing tube 10 may have a circular cross-section. The solar energy absorbing tube 10 is made of a material that absorbs and conducts solar energy well, such as steel, copper or any other heat-conducting material. The solar energy absorbing tube 10 may have a dark color, preferably black, so that it absorbs most of the solar energy directed towards it. According to an embodiment, the thermal solar collector arrangement 1 also comprises a second tube 12 surrounding the solar energy absorbing tube 10. The second tube 12 is transparent for sunlight so that the solar energy directed toward the solar energy absorbing tube 10 is transported through the second tube 12 and onto the solar energy absorbing tube 10. The second tube 12 may be of a polymer material. A purpose with such a second tube 12 is to capture air that is closest to the solar energy absorbing tube 10 which hereby may be warmed up by any waste heat from the solar energy absorbing tube and hereby secondary contribute to the warming up of the solar energy absorbing tube and the fluid inside it. With such a second tube 12 of a transparent material, a higher efficiency can be achieved for the thermal solar collector arrangement 1. The second tube 12 extends along the central axis X coaxially with the solar energy absorbing tube 10. The second tube 12 has a larger cross-section than the solar energy absorbing tube 10, for example a diameter that is two times the diameter of the solar energy absorbing tube 10.

The thermal solar collector arrangement 1 further has a reflector 20 that is positioned at a distance from the solar energy absorbing tube 10. The reflector 20 extends from its first end 20a to its second end 20b along the solar energy absorbing tube 10, i.e., parallel to the central axis X of the solar energy absorbing tube 10. The reflector 20 has a bent cross-sectional shape in a plane Y-Y perpendicular to the central axis X of the solar energy absorbing tube 10. The cross-sectional shape of the reflector is shown in fig. 2. The reflector 20 preferably has the same bent cross-sectional shape along its extension parallel to the central axis X. The reflector 20 is preferably substantially thin, i.e. it has a substantially short extension in a radial direction from the central axis X of the solar energy absorbing tube 10. The extension of the reflector 20 in the radial direction is preferably approximately the same over the whole reflector, i.e. the reflector 20 has an even thickness. The reflector 20 has an outer surface 21 directed away from the solar energy absorbing tube 10 and an inner surface 22 directed towards the solar energy absorbing tube 10. The reflector 20 has such a bent shape and is positioned at such a distance from the solar energy absorbing tube 10 that light beams falling onto the inner surface 22 of the reflector 20, after being reflected falls onto the solar energy absorbing tube 10.

The reflector 20 extends in cross-section from a first cross-sectional end 23 to a second cross-sectional end 24 (fig. 2). According to an embodiment, in cross-section in the plane Y-Y, the reflector 20 has an extension around the solar energy absorbing tube 10 from its first cross-sectional end 23 to its second cross-section end 24 so that is covers approximately 180 degrees around the solar energy absorbing tube 10. In other words, and as illustrated in fig. 2, perpendicular to the central axis X, the reflector 20 covers an angle α of approximately 180 degrees taken from the center of the solar energy absorbing tube 10. However, the angle covered may be a little less or a little more, especially in the embodiment that will be described now. According to this embodiment, the solar energy absorbing tube 10 is positioned slightly skewed from a focal line of the reflector 20 parallel to the central axis X so that light reflected by the reflector 20 falls spread out over the envelope surface of the solar energy absorbing tube 10, preferably over the whole part of the envelope surface of the solar energy absorbing tube 10 that can be lit by the reflected light. The larger the solar energy absorbing tube 10 is in cross-section perpendicular to its central axis, the more the solar energy absorbing tube 10 is skewed from the focal line.

According to a preferred embodiment, the reflector 20 has a cross-sectional shape that is a circular section, most preferably a semi-circle. A cross-sectional shape that is semi-circular is especially advantageous as it fits well with a filled semi-circular wall 30, 35, which will be explained further below. According to another embodiment, the reflector 20 has an elliptical cross-sectional shape.

The inner surface 22 of the reflector 20 is of a reflective material. The reflective material may be a metal, such as aluminum or steel, or any other type of reflective material. According to an embodiment, the reflector 20 has a base of an environmental-friendly and cost-efficient material such as paperboard or recycled plastic, coated with the reflective material such as an aluminum foil on its inner surface 22. The base of a material such as paperboard may be coated on the outer surface 21 with a material that is durable to weather conditions, such as a polymer. Alternatively, the reflector 20 may be solely made of a metal, such as stainless steel, which is very durable, however more expensive.

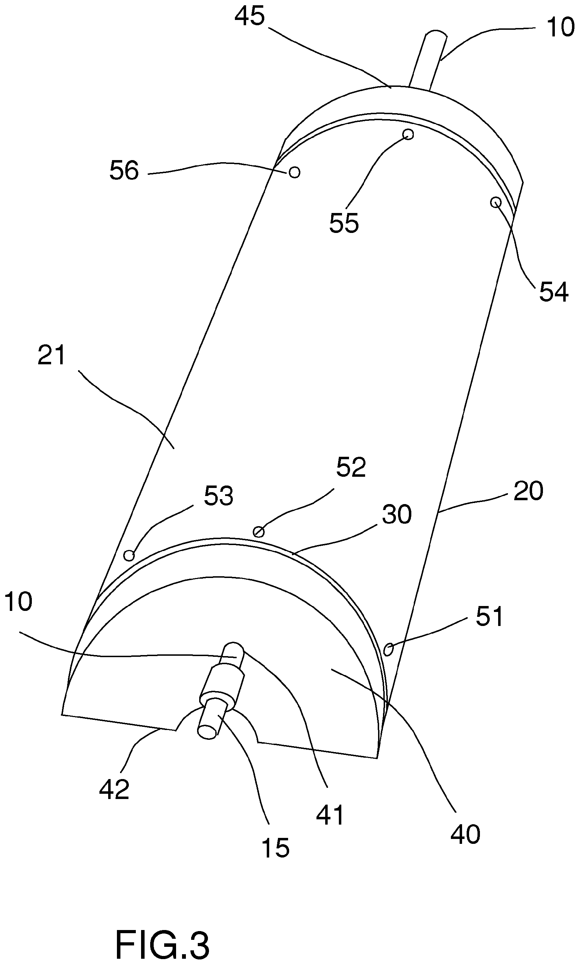

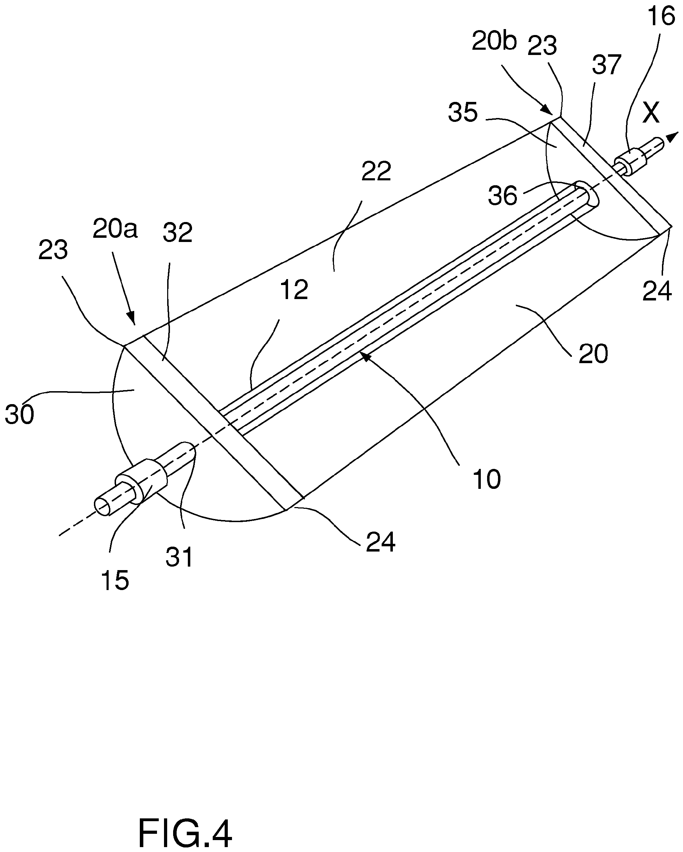

As shown in e.g. figs. 1, 3 and 4, the thermal solar collector arrangement 1 further has a first wall 30 secured to the first end 20a of the reflector 20. The first wall 30 is secured to the first end 20a of the reflector 20 so that it bears against the inner surface 22 of the reflector at the first end 20a of the reflector 20. The first wall 30 has a first side, preferably in a shape complementary to the cross-sectional shape of the reflector 20 so that the first side follows the inner surface 2 of the reflector 20, i.e. the cross-sectional extension of the reflector 20 from its first cross-sectional end 23 to its second cross-sectional end 24, as shown in fig. 2. The first wall 30 also has a base 32, see e.g. fig. 1 and fig. 4. The base 32 connects opposite ends of the first side of the first wall 30. In other words, the base 32 extends from the first cross-sectional end 23 to the second cross-sectional end 24 of the reflector 20 at the first end 20a of the reflector 20. However, when the base 32 extends from the first cross-sectional end 23 to the second cross-sectional end 24 of the reflector 20, it is distant from the reflector 20. Preferably, the base 32 of the first wall 30 provides a plane surface facing away from the inner surface 22 of the reflector 20. That the base 32 provides a plane surface facing away from the inner surface 22 of the reflector signifies that the surface of the base 32 extends as a straight plane between the first and second cross-sectional ends 23, 24 of the reflector 20. According to an embodiment, the first wall 30 has a cross-section of a half-circle, where the diameter of the half-circle is where the base 32 is and the periphery of the half-circle is where the first side is. The first wall 30 has a thickness in the extension direction of the thermal solar collector arrangement 1, which thickness preferably is the same for the whole first wall 30. According to an embodiment, the first wall 30 has a shape of a substantially flat, filled half-cylinder. The bent envelope surface of the first wall 30 may be secured to the first end 20a of the reflector 20. The first wall 30 may be secured to the reflector 20 by a plurality of attachment means 51, 52, 53, such as screws or rivets, spread out over the periphery of the first end 20a of the reflector, as shown in fig. 3.

The thermal solar collector arrangement 1 further has a second wall 35 secured to the second end 20b of the reflector 20, i.e. distal from the first wall 30. The second wall 35 is secured to the second end 20b of the reflector 20 so that it bears against the inner surface 22 of the reflector at the second end 20b of the reflector 20. The second wall 35 has a base 37, see e.g. fig. 1 and fig. 4. The second wall 35 is arranged according to any of the embodiments described above for the first wall 30. According to a preferred embodiment, the second wall 35 has the same size and shape as the first wall 30. The second wall 35 may be secured to the reflector 20 by a plurality of attachment means 54, 55, 56, such as screws or rivets, spread out over the periphery of the second end 20b of the reflector 20, see fig. 3.

In the embodiment where there is a second tube 12 surrounding the solar energy absorbing tube 10, the second tube 12 may extend between the first wall 30 and the second wall 35.

As shown in fig. 1 and 3, the thermal solar collector arrangement 1 further has a first foot 40 arranged at the first end 1a of the solar collector arrangement. The first foot 40 has a base 42 for positioning on a ground surface. The base 42 is preferably substantially flat, or provides a flat surface, so that it will stand steady on ground when positioned on a ground surface. The base 42 preferably has a considerable surface area in order to stand steady on ground surface. The first foot 40 may be positioned outside of the first wall 30 so that the first foot 40 faces a side of the first wall 30 facing away from the second wall 35. According to an embodiment, the first foot 40 has a shape of a filled half-cylinder where the rectangular side of the half-cylinder constitutes the base 42 of the first foot 40. The filled half-cylinder may be substantially flat. According to another embodiment, there is a recess 43 in the base 42 of the first foot 40. The recess 43 is positioned in the middle part of the base 42, i.e. in the center of a cylinder which the half cylinder is part of. The recess 43 may be shaped as a half-cylinder.

The thermal solar collector arrangement 1 further has a second foot 45 arranged at the second end 1b of the solar collector arrangement. The second foot 45 has a base 47 for positioning on a ground surface. The second foot 45 may be positioned outside of the second wall 35 so that the second foot 45 faces a side of the second wall 35 facing away from the first wall 30. The second foot 45 is arranged according to any of the embodiments described above for the first foot 40. According to a preferred embodiment, the second foot 45 has the same size and shape as the first foot 40. The first and second foot 40, 45 may be produced from a cylinder with a circular cross-section where the first and second foot 40, 45 are produced by parting the cylinder centrally along the center axis of the cylinder. In the embodiment where there is a recess 43 in the respective first and second foot 40, 45, the first and second foot may be produced by parting into two equal parts, a cylinder with circular cross-section having a centrally placed hole with circular cross-section extending through the respective foot 40, 45.

The first and second wall 30, 35 may be made of any material that is durable to tough weather conditions. The material is preferably cost-efficient. An example of a material suitable for the walls 30, 35 is a composite material comprising a polymer reinforced with organic fiber material. Such a composite material is also suitable for the first and second foot 40.

Further, the solar energy absorbing tube 10 extends through the first foot 40, the first wall 30, the second wall 35 and the second foot 45. The reflector 20, the first wall 30 and the second wall 35 are rotatably arranged to the first and second foot 40, 45 and rotatable around the central axis X of the solar energy absorbing tube 10. In other words, as the first wall 30 and the second wall 35 are secured to the reflector 20 and rotatably arranged in relation the first and second foot 40, 45, when the reflector 20 and walls 30, 35 are rotated they will rotate together around the central axis X of the solar energy absorbing tube 10 but the first and second foot 40, 45 will not rotate. The reflector 20 and walls 30, 35 are preferably to be rotated manually, i.e. there is not any motor provided for the rotation. However, in an embodiment, a motor may be provided for the rotation.

The first wall 30 and the second wall 35 may each present a hole 31, 36 through which the solar energy absorbing tube 10 extends (see fig. 4). The solar energy absorbing tube 10 may not be secured to the respective wall 30, 35 whereby the reflector 20 and the first and second walls 30, 35 can be rotated without rotating the solar energy absorbing tube 10. Alternatively, the respective wall 30, 35 may be provided with a bearing (not shown) secured to a periphery of the respective hole 31, 36 with one side of the bearing and to the solar energy absorbing tube 10 with the opposite side of the bearing, whereby the reflector 20 and the first and second walls 30, 35 can be rotated without rotating the solar energy absorbing tube 10 but there is still a secured connection between the walls 30, 35 and the tube 10 via the bearings. Alternatively, the solar energy absorbing tube 10 is secured to the respective wall 30, 35 so that when rotating the reflector 20 and the first and second walls 30, 35, the solar energy absorbing tube 10 also rotates.

The first foot 40 and the second foot 45 may each present a hole 41 through which the solar energy absorbing tube 10 extends. (See fig. 1 and 3, the hole in the second foot 45 is not shown in the figures). The solar energy absorbing tube 10 may not be secured to the respective foot 40, 45. Alternatively, the respective foot 40, 45 may be provided with a bearing (not shown) secured to a periphery of the respective hole 41 with one side of the bearing and to the solar energy absorbing tube 10 with the opposite side of the bearing. Hereby, the reflector 20 and the first and second walls 30, 35 can be rotated without rotating the feet 40, 45, even in the alternative embodiment where the solar energy absorbing tube 10 rotates with the reflector 20. Alternatively, the solar energy absorbing tube 10 is secured to the respective foot 40, 45. In this alternative, the solar energy absorbing tube 10 cannot be secured to any of the walls 30, 35 as this would imply a rotation of the feet 40, 45 when the reflector 20 is rotated.

Still further, and according to the invention, the first foot 40, the first wall 30, the second foot 45 and the second wall 35 are so dimensioned that the reflector 20 when rotated around the central axis X can be rotated into a closed position in which the base 32 of the first wall 30 is in level with the base 42 of the first foot 40 and the base 37 of the second wall 35 is in level with the base 47 of the second foot 45. This closed position is shown in fig. 3. According to an embodiment that may be combined with the above, positions of the first wall 30, the second wall 35, the first foot 40 and the second foot 45 where the solar energy absorbing tube 10 extends through the first wall, second wall, first foot and second foot, respectively, are so selected that the reflector 20 when rotated around the central axis X can be rotated into a closed position in which the base 32 of the first wall 30 is in level with the base 42 of the first foot 40 and the base 37 of the second wall 35 is in level with the base 47 of the second foot 45.

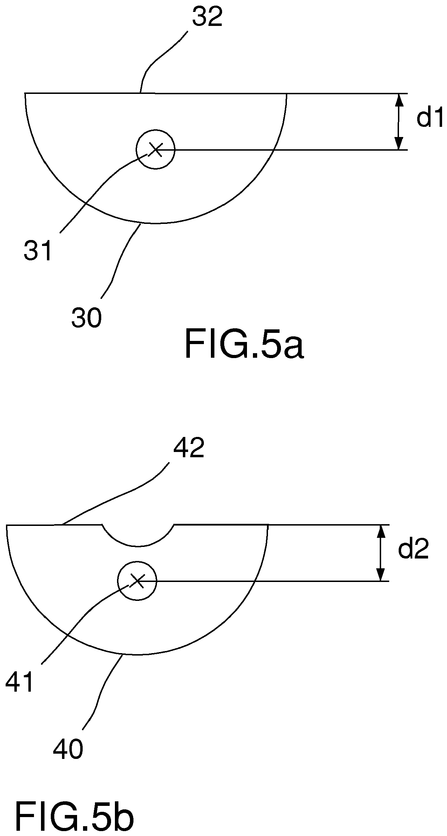

Fig. 5a is a side view of the first wall 30. Fig. 5b is a side view of the first foot 40. According to an embodiment, a first distance d1 between the hole 31 of the first wall 30 and the base 32 of the first wall 30 perpendicular to the base 32 of the first wall 30 is approximately the same as a second distance d2 between the hole 41 of the first foot 40 and the base 42 of the first foot 40 perpendicular to the base 42 of the first foot 40. Hereby, when the reflector 20 is rotated from an open position as in fig. 1 to a closed position as in fig. 3, the base 32 of the first wall 30 will be in line with the base 42 of the first foot 40, and as the base of the first foot stands on ground, the reflector will be more or less closed when the arrangement is in the closed position of fig. 3. The distance d1 as well as the distance d2 may be measured from the center of the respective hole 31, 41. In a similar way, a third distance between the hole 36 of the second wall 35 and the base 37 of the second wall 35 perpendicular to the base 37 of the second wall 35 is approximately the same as a fourth distance between the hole of the second foot 45 and the base 47 of the second foot 45 perpendicular to the base 47 of the second foot 45.

According to another embodiment, the solar energy absorbing tube 10 is provided with a first connection portion 15 for connection to a hose or similar through which incoming fluid may be provided. The first connection portion 15 is situated outside the first foot 40, facing a surface of the first foot 40 that faces away from the reflector 20. According to another embodiment, the solar energy absorbing tube 10 is provided with a second connection portion 16 for connection to a hose or similar through which outflowing fluid may flow, fluid that has been heated in the solar energy absorbing tube 10. The second connection portion 16 is situated outside the second foot 45, facing a surface of the second foot 45 that faces away from the reflector 20.

When using the thermal solar collector arrangement 1, incoming fluid, here exemplified by water, may be provided through the solar energy absorbing tube 10 at the first end 1a of the thermal solar collector arrangement. When in use, the solar collector arrangement 1 is to be located in its open position as shown in fig. 1 in a place so that sunlight can shine on the reflector and be reflected towards the solar energy absorbing tube. When the water inside the solar energy absorbing tube 10 has been heated up a while, the heated water can be tapped off at the second end of 1b of the solar collector arrangement 1. According to an embodiment, the thermal solar collector arrangement 1 may have a temperature meter for measuring the temperature of the fluid inside the solar energy absorbing tube. According to another embodiment, the thermal solar collector arrangement 1 has no such temperature meter. Instead, a temperature meter may be situated at a tap off position to which the arrangement 1 is connected via e.g. the second connection portion 16. When the thermal solar collector arrangement 1 is not to be used any more for the moment, and/or when bad weather is approaching, the reflector 20 can very easily be rotated from its open position in fig. 1 to its closed position in fig. 3 by simply pushing the reflector so that it rotates around the central axis X into its closed position. Depending on realized embodiment, it may be possible that the arrangement needs to be lifted when rotating in order for the reflector 20 to reach the closed position.

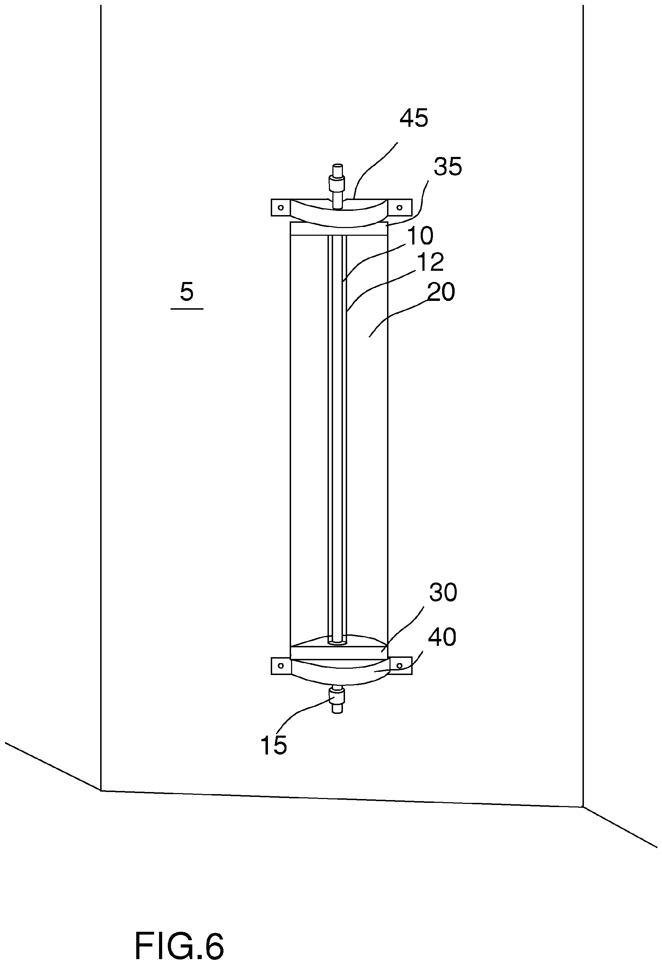

Fig. 6 describes another use case for the thermal solar collector arrangement 1. In this use case, the thermal solar collector arrangement 1 is arranged vertically on a vertical outside wall 5 of e. g., a building. The first and second foot 40, 45 are securely arranged to the wall 5, optionally via a respective bracket. As the reflector 20 is rotatably arranged to the first and second foot 40, 45 and rotatable around the central axis X of the solar energy absorbing tube 10, the reflector 20 can be rotated so that it follows the movement of the sun over the sky from east to west. The rotation of the reflector 20 may be made manually. Alternatively, and advantageously, the thermal solar collector arrangement 1 may be provided with a drive unit, i.e. a motor, (not shown) connected to the reflector 20 in such a way that it can rotate the reflector 20 so that the reflector is positioned towards the sun during the day. The motor may be driven by a clock whereby the movement of the sun is easily followed. This embodiment is especially advantageous in countries rather far from the equator, where the sun is far from zenith in the middle of the day, such as the Nordic countries, Canada and Russia. Further, and according to embodiments of the invention, the reflector 20 can be rotated into the closed position when not in use, for example in the night, in order to protect the reflector 20.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A thermal solar collector arrangement (1) extending in an extension direction from its first end (1a) towards its second end (1b), the solar collector arrangement (1) comprising:
a solar energy absorbing tube (10) for receiving a fluid, the solar energy absorbing tube having a central axis (X) extending in the extension direction,
a reflector (20), extending along the solar energy absorbing tube (10) from its first end (20a) to its opposite second end (20b), the reflector (20) having a reflecting inner surface (22) pointing towards the solar energy absorbing tube (10), the reflector (20) having a bent shape arranged so that light falling onto the inner surface (22) of the reflector (20), after being reflected falls onto the solar energy absorbing tube (10), the bent shape being a bent cross-sectional shape in a plane (Y) perpendicular to the extension direction from a first cross-sectional end (23) to a second cross-sectional end (24) of the reflector (20),
a first wall (30) secured to the first end (20a) of the reflector (20), along the inner surface (22) of the reflector (20), the first wall (30) having a base (32) extending between the first cross-sectional end (23) and the second cross-sectional end (24) of the reflector, the base (32) being distanced from the reflector (20) between the first and the second cross-sectional ends (23, 24),
a second wall (35) secured to the second end (20b) of the reflector (20), along the inner surface (22) of the reflector (20), the second wall (35) having a base (37) extending between the first cross-sectional end (23) and the second cross-sectional end (24) of the reflector, the base (37) being distanced from the reflector (20) between the first and the second cross-sectional end (23, 24),
a first foot (40) arranged at the first end (1a) of the solar collector arrangement, the first foot (40) having a base (42) for positioning on a ground surface, and
a second foot (45) arranged at the second end (1b) of the solar collector arrangement, the second foot (45) having a base (47) to be positioned on a ground surface,
the solar energy absorbing tube (10) extending through the first foot (40), the first wall (30), the second wall (35), and the second foot (45),
wherein the reflector (20), the first wall (30) and the second wall (35) are rotatably arranged to the first and second foot (40, 45) and rotatable around the central axis (X) of the solar energy absorbing tube (10), and wherein
the first foot (40), the first wall (30), the second foot (45) and the second wall (35) are so dimensioned that the reflector (20) when rotated around the central axis (X) can be rotated into a closed position in which the base (32) of the first wall (30) is in level with the base (42) of the first foot (40) and the base (37) of the second wall (35) is in level with the base (47) of the second foot (45).

2. Thermal solar collector arrangement (1) according to claim 1, wherein a position of the first wall (30) where the solar energy absorbing tube (10) extends through the first wall (30), a position of the second wall (35) where the solar energy absorbing tube (10) extends through the second wall (35), a position of the first foot (40) where the solar energy absorbing tube (10) extends through the first foot (40) and a position of the second foot (45) where the solar energy absorbing tube (10) extends through the second foot (45) are so selected that the reflector (20) when rotated around the central axis (X) can be rotated into a closed position in which the base (32) of the first wall (30) is in level with the base (42) of the first foot (40) and the base (37) of the second wall (35) is in level with the base (47) of the second foot (45).

3. Thermal solar collector arrangement (1) according to claim 1 or 2, wherein a first distance (d1) between a position of the first wall (30) where the solar energy absorbing tube (10) extends through the first wall (30) and the base (32) of the first wall (30), the first distance (d1) being perpendicular to the base (32) of the first wall (30), is approximately the same as a second distance (d2) between a position of the first foot (40) where the solar energy absorbing tube (10) extends through the first foot (40) and the base (42) of the first foot (40), the second distance (d2) being perpendicular to the base (42) of the first foot (40), and
wherein a third distance between a position of the second wall (35) where the solar energy absorbing tube (10) extends through the second wall (35) and the base (37) of the second wall (35), the third distance being perpendicular to the base (37) of the second wall (35), is approximately the same as a fourth distance between a position of the second foot (45) where the solar energy absorbing tube (10) extends through the second foot (45) and the base (47) of the second foot (45), the fourth distance being perpendicular to the base (47) of the second foot (45).

4. Thermal solar collector arrangement (1) according to claim 1 or 2,
wherein the first wall (30) has a hole (31) through which the solar energy absorbing tube (10) extends, and the first foot (40) has a hole (41) through which the solar energy absorbing tube (10) extends, and
wherein a first distance (d1) between the hole (31) of the first wall (30) and the base (32) of the first wall (30) perpendicular to the base (32) of the first wall (30) is approximately the same as a second distance (d2) between the hole (41) of the first foot (40) and the base (42) of the first foot (40) perpendicular to the base (42) of the first foot (40), and
wherein the second wall (35) has a hole (36) through which the solar energy absorbing tube (10) extends, and the second foot (45) has a hole through which the solar energy absorbing tube (10) extends, and
wherein a third distance between the hole (36) of the second wall (35) and the base (37) of the second wall (35) perpendicular to the base (37) of the second wall (35) is approximately the same as a fourth distance between the hole of the second foot (45) and the base (47) of the second foot (45) perpendicular to the base (47) of the second foot (45).

5. Thermal solar collector arrangement according to any of the preceding claims, wherein the first foot (40) is positioned outside of the first wall (30) so that the first foot (40) faces a side of the first wall (30) facing away from the second wall (35), and the second foot (45) is positioned outside of the second wall (35) so that the second foot (45) faces a side of the second wall (35) facing away from the first wall (30).

6. Thermal solar collector arrangement (1) according to any of the preceding claims, wherein the reflector (20) has a circular shape in the cross-sectional plane (Y) and an extension from its first cross-sectional end (23) to its second cross-sectional end (24) that covers approximately 180 degrees seen from a center of a circle of the circular shape, or wherein the reflector (20) has an elliptical shape in the cross-sectional plane (Y) and an extension from its first cross-sectional end (23) to its second cross-sectional end (24) that covers approximately 180 degrees seen from a center of an ellipse of the elliptical shape.

7. Thermal solar collector arrangement (1) according to any of the preceding claims, wherein the base (32) of the first wall (30) provides a plain surface facing away from the inner surface (22) of the reflector (20), and wherein the base (37) of the second wall (35) provides a plain surface facing away from the inner surface (22) of the reflector (20).

8. Thermal solar collector arrangement (1) according to any of the preceding claims, wherein the bent cross-sectional shape of the reflector (20) in the plane (Y) perpendicular to the extension direction is a shape of an arc of a circle, and wherein the solar energy absorbing tube (10) is positioned biased from a center of the circle.

9. Thermal solar collector arrangement (1) according to any of the preceding claims, wherein the first wall (30) has a shape of a substantially flat, filled, half cylinder which bent envelope surface is secured to the first end (20a) of the reflector (20), and wherein the second wall (35) has a shape of a substantially flat, filled, half cylinder which bent envelope surface is secured to the second end (20b) of the reflector (20).

10. Thermal solar collector arrangement (1) according to any of the preceding claims, wherein the first foot (40) has a shape of a substantially flat, filled, half cylinder, which straight surface opposite its bent envelope surface constitutes the base (42) of the first foot (40), and wherein the second foot (45) has a shape of a substantially flat, filled, half cylinder, which straight surface opposite its bent envelope surface constitutes the base (47) of the second foot (45).

11. Thermal solar collector arrangement (1) according to any of the preceding claims, wherein the first and second wall (30, 35) are composed of a composite material comprising a polymer reinforced with organic fiber material.

12. Thermal solar collector arrangement (1) according to any of the preceding claims, further comprising a second tube (12) surrounding the solar energy absorbing tube (10), the second tube (12) being of a transparent material.
